# EUROPÄISCHE PATENTANMELDUNG

(11) **EP 2 503 600 A2**
(43) Veröffentlichungstag der Anmeldung: **26.09.2012**
(21) Anmeldenummer: 12160758.4
(22) Anmeldetag: 22.03.2012
(51) Int. Cl.: H01L 31/042, F24J 2/52

(54) **Sicherheitsklemme für PV-Module und Verfahren zum Sichern von PV-Modulen in einem Einlegesystem**

(30) Priorität: 22.03.2011 DE 102011015118
(71) Anmelder: Creotecc GmbH, 79111 Freiburg (DE)
(72) Erfinder: Walz, Leo, 79117 Freiburg (DE)
(74) Vertreter: Witte, Weller & Partner

(57) **Zusammenfassung**

Sicherheitsklemme (40) zur Hemmung eines Diebstahls von PV-Modulen (12) mit Seitenrändern (28), wobei die PV-Module (12) vorzugsweise benachbart zwischen zwei parallelen Einlegeschienen (14-1, 14-2) eines Einlegsystems (10), die die Seitenränder (28) der PV-Module (12) zwecks einer Fixierung der PV-Module (12) im Einlegesystem (10) umgreifen, schwimmend gehalten werden, aufweisend: einen plattenförmigen Grundkörper (42), der zumindest ein Flügelelement (44) und zumindest eine erste Kontaktnase (46) aufweist; wobei das zumindest eine Flügelelement (44) elastisch biegsam aus dem Grundkörper (42) vorsteht und wobei die zumindest eine erste Kontaktnase (46) biegsam aus dem Grundkörper (42) vorsteht; wobei das zumindest eine Flügelelement (44) derart dimensioniert ist, dass das zumindest eine Flügelelement (44) eine Breite (82) eines Hohlraums (30) im Wesentlichen ausfüllt, der zwischen mindestens einem der PV-Module (12) und einer der Einlegschienen (14) definiert ist, wenn das mindestens eine der PV-Module (12) in einem eingebauten Zustand in dem Einlegsystem (10) angeordnet ist (Fig. 2).

## Beschreibung

Die vorliegende Erfindung betrifft eine Klemme, mit der PV-Module in Einlegeschienen eines Einlegesystems diebstahlhemmend und/oder mittels Erdung gegen Blitze geschützt installiert werden können. Des Weiteren betrifft die Erfindung ein Verfahren zum Sichern der PV-Module in dem Einlegesystem gegen Diebstahl und Blitzschlag.

Ein Problem, das bei PV-Modulen besteht, die von Einlegesystemen gehalten werden, stellt der Blitzschutz dar.

Ein weiteres Problem ist in der Diebstahlsicherung zu sehen. Da die PV-Module teuer sind, ist es erforderlich, die eingebauten PV-Module vor Diebstahl zu sichern.

Das Dokument WO 2006/086808 A1 offenbart ein Traggestell für Plattenförmige Solarzellen oder Sonnenkollektor-Module.

Das Dokument DE 20 2009 016 873 U1 offenbart ein System zur Befestigung eines Solarmoduls mit: einem Trägerelement zur Befestigung am Untergrund bzw. an einer Unterkonstruktion; und einer Halterung, die am Trägerelement angeordnet ist, wobei die Halterung durch einen Formschluss mit dem Trägerelement verbunden ist.

Das Dokument DE 10 2008 055 937 A1 offenbart ein Einleg-KlemmSystem aus dem Bereich der Solarmodulbefestigungstechnik.

Es ist daher eine Aufgabe der vorliegenden Erfindung, PV-Module in Einlegesystemen gegen Blitzschlag und Diebstahl zu sichern. Es ist eine weitere Aufgabe der vorliegenden Erfindung, ein Verfahren bereitzustellen, wie PV-Module in Einlegesysteme eingebaut werden können, um gegenüber Blitzschlag und Diebstahl gesichert zu sein.

Diese Aufgabe wird durch eine Sicherheitsklemme zur Hemmung eines Diebstahls eines PV-Moduls bzw. von zwei benachbart angeordneten PV-Modulen mit Seitenrändern gelöst, wobei jedes PV-Modul zwischen zwei parallelen Einlegeschienen eines Einlegesystems, die die Seitenränder der PV-Module zwecks einer Fixierung der PV-Module im Einlegesystem umgreifen, schwimmend gehalten wird bzw. werden, wobei die Sicherheitsklemme aufweist: einen plattenförmigen Grundkörper, der zumindest ein Flügelelement, und vorzugsweise zumindest eine erste Kontaktnase, aufweist; wobei das zumindest eine Flügelelement elastisch biegsam ist und aus dem Grundkörper vorsteht; wobei das zumindest eine Flügelelement derart dimensioniert ist, dass das zumindest eine Flügelelement eine Breite eines Hohlraums im Wesentlichen ausfüllt, der zwischen dem bzw. den PV-Modulen und einer der Einlegeschienen definiert ist, wenn das bzw. die PV-Module in einem eingebauten Zustand in dem Einlegesystem angeordnet ist bzw. sind.

Die Sicherheitsklemme weist vorzugsweise zumindest eine erste Kontaktnase auf, wobei die zumindest eine erste Kontaktnase biegsam ist und aus dem Grundkörper vorsteht.

Insbesondere steht die zumindest eine erste Kontaktnase derart aus dem Grundkörper vor, dass die Klemme zwischen dem bzw. den PV-Modulen und einer der Einlegeschienen verteilbar ist.

Diese Aufgabe wird ferner durch eine Sicherheitsklemme zur Sicherung bei Blitzschlag eines oder von zwei benachbart angeordneten PV-Modulen mit Seitenrändern gelöst, wobei das bzw. die PV-Module zwischen zwei parallelen Einlegeschienen eines Einlegsystems, die die Seitenränder der PV-Module zwecks einer Fixierung der PV-Module im Einlegesystem umgreifen, schwimmend gehalten wird bzw. werden, aufweisend: einen plattenförmigen Grundkörper, der zumindest eine erste Kontaktnase und vorzugsweise zumindest ein Flügelelement, aufweist; wobei die zumindest eine erste Kontaktnase derart aus dem Grundkörper vorsteht, dass die Klemme zwischen den PV-Modulen und einer der Einlegeschienen verkeilbar ist.

Vorzugsweise steht das zumindest eine Flügelelement elastisch biegsam aus dem Grundkörper vor; und wobei das zumindest eine Flügelelement derart dimensioniert ist, dass das zumindest eine Flügelelement eine Breite eines Hohlraums im Wesentlichen ausfüllt, der zwischen mindestens einem der PV-Module und einer der Einlegschienen definiert ist, wenn das mindestens eine der PV-Module in einem eingebauten Zustand in dem Einlegsystem angeordnet ist.

Das oder die Flügelelemente schnappen beim Einführen der Sicherheitsklemme in den Hohlraum ein, der im eingelegten Zustand zwischen dem PV-Modul und der Einlegeschiene vorhanden ist. Da man von außen nicht in den Hohlraum eingreifen kann, können die eingeschnappten Flügelelemente nicht ohne geeignetes Hilfswerkzeug gelöst werden. Die Klemme wirkt also zum einen als Diebstahlschutz. Ferner wirkt die Klemme auch als Blitzschlagschutz, da sie die Oberseite des PV-Moduls elektrisch mit der Einlegeschiene sicher verbindet. Die elektrische Verbindung erfolgt über die Kontaktnase(n).

Vorzugsweise ist mindestens eine zweite Kontaktnase vorgesehen, die aus dem Grundkörper in einer Richtung vorsteht, die entgegengesetzt zu einer Richtung orientiert ist, in welche die erste Kontaktnase aus dem Grundkörper vorsteht.

Wenn die erste und die zweite Kontaktnase in unterschiedlichen Richtungen aus dem Grundkörper vorstehen, ist die elektrische (und mechanische) Kontaktierung der Oberseite des PV-Moduls mit der Einlegeschiene immer gewährleistet. Die Sicherheitsklemme selbst wird sich vorzugsweise genau in der Mitte zwischen der Oberseite des PV-Moduls und einer Unterseite eines oberen Abschnitts der Einlegeschiene positionieren. Da dieser Abstand in der Regel geringer als der Abstand der entgegengesetzt aus dem Grundkörper vorstehenden Kontaktnasen ist, müssen die Nasen zusammengepresst werden, um eingeführt zu werden. Die dazu erforderliche Kraft hält die Sicherheitsklemme im eingebauten Zustand, in welchem sie die Kontaktnasen gegen das PV-Modul bzw. die Einlegeschiene drückt.

Bei einer bevorzugten Ausgestaltung besteht die Sicherheitsklemme aus einem elektrisch leitfähigen Material.

Das elektrisch leitfähige Material gewährleistet den Einsatz der Sicherheitsklemme als Blitzschutzvorrichtung.

Bei einer weiteren vorteilhaften Ausgestaltung weist der Grundkörper eine im Wesentlichen rechteckige Grundfläche auf, wobei jedes Flügelelement und jede Kontaktnase durch Schneiden, Stanzen und/oder Aufbiegen des Grundkörpers gebildet wird.

Die Sicherheitsklemme lässt sich so einfach herstellen. Die Flügelnasen können durch jeweils einen Schnitt mit anschließendem Aufbiegen des geschnittenen Abschnitts hergestellt werden. Die Flügelelemente können durch Stanzen hergestellt werden, wobei ausgestanzte Teile zusätzlich aufgebogen werden können.

Der Grundkörper, jedes Flügelelement und jede Kontaktnase sind also vorzugsweise einstückig miteinander ausgebildet. Weitere Bearbeitungsschritte beim Herstellen, wie zum Beispiel Schweißen oder Löten, sind nicht zwingend erforderlich.

Bei einer weiteren vorteilhaften Ausgestaltung ist jedes Flügelelement an einem Rand des Grundkörpers angeordnet.

Wenn die Flügelelemente am Rand des Grundkörpers angeordnet sind, ist im Idealfall lediglich ein einziger Schnitt erforderlich, um das Flügelelement aus dem Grundkörper zu bilden.

Vorzugsweise ist der Grundkörper so dick, dass der Grundkörper zwischen einer Oberseite eines PV-Moduls und einer Einlegeschiene schiebbar ist.

Ferner ist es von Vorteil, wenn eine Grundfläche jedes Flügelelements rechteckig ist.

Bei einer weiteren Ausgestaltung der Erfindung ist eine Grundfläche jeder Kontaktnase dreieckig.

Durch die Dreiecksform bildet sich eine Spitze in dem Bereich, wo die Nase aus dem Grundkörper vorsteht. In Abhängigkeit von der Form dieser spitzen Nase kann sich die Nase in die Oberseite des PV-Moduls oder die Einlegeschiene drücken und so eine sichere (elektrische und) mechanische Verbindung herstellen. Die mechanische Verbindung gewährleistet die elektrische Verbindung zum Zwecke des Schutzes vor Blitzschlägen.

Die oben genannte Aufgabe wird ferner durch ein Verfahren zum Sichern eines PV-Moduls in Einlegeschienen eines Einlegesystems mit einer Sicherheitsklemme gelöst, die vorzugsweise gemäß der Erfindung ausgebildet ist, wobei das Verfahren die folgenden Schritte aufweist: Positionieren der Sicherheitsklemme an einem der PV-Module; Niederdrücken der Sicherheitsklemme, so dass mindestens ein Flügelelement im Wesentlichen in einer Plattenebene eines Grundkörpers der Sicherheitsklemme liegt; und Einschieben der Sicherheitsklemme in einen Spalt zwischen einer oberen Einlegeschiene und einer Oberseite des einen der PV-Module, bis das mindestens eine Flügelelement sich in einen Hohlraum entspannt und so ein Zurückbewegen der Sicherheitsklemme verhindert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

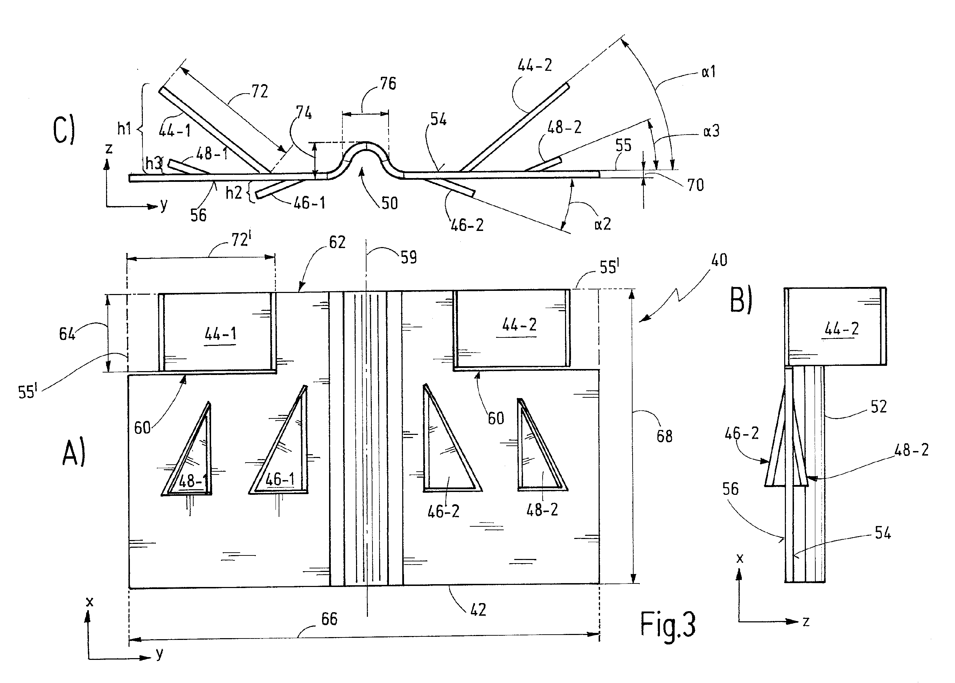

Ausführungsbeispiele der Erfindung sind in der Zeichnung dargestellt und werden in der nachfolgenden Beschreibung näher erläutert. Es zeigen:
Fig. 1A -1D
   einen Ablauf eines Einlegevorgangs, bei dem ein PV-Modul auf eine schwimmende Weise in ein Einlegesystem eingelegt wird;

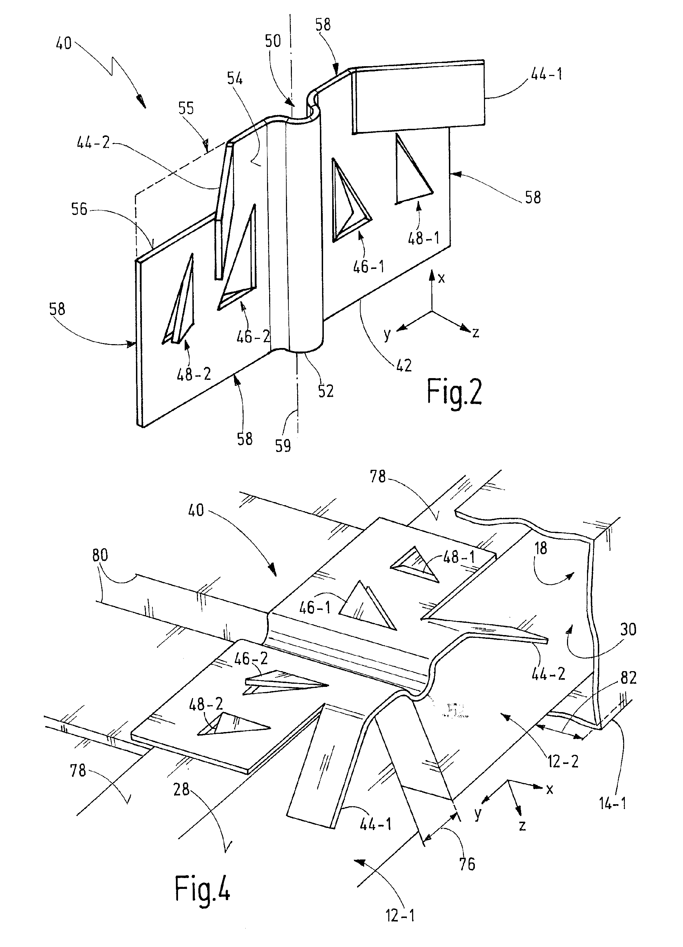

Fig. 2 eine perspektivische Ansicht einer Klemme gemäß der Erfindung;
Fig. 3A-3C
   eine Draufsicht (Fig. 3A), eine Seitenansicht (Fig. 3B) und eine Vorderansicht (Fig. 3C) der Klemme der Fig. 2;
Fig. 4 eine perspektivische Darstellung der Klemme der Fig. 2 und 3 in einem eingebauten Zustand;
Fig. 5A-5C
   eine Sequenz zum Einlegen der Klemme der Fig. 2 in perspektivischer Darstellung;
Fig. 6 eine perspektivische Darstellung einer Zange zum Entfernen der Klemme der Fig. 2 aus dem eingebauten Zustand gemäß der Fig. 4; und
Fig. 7 ein Flussdiagramm eines Verfahrens gemäß der Erfindung.

Bei der nachfolgenden Beschreibung der Figuren werden gleiche Elemente, Komponenten und Merkmale mit den gleichen Bezugszeichen versehen. Ähnliche Gegenstände werden mit ähnlichen Bezugszeichen versehen.

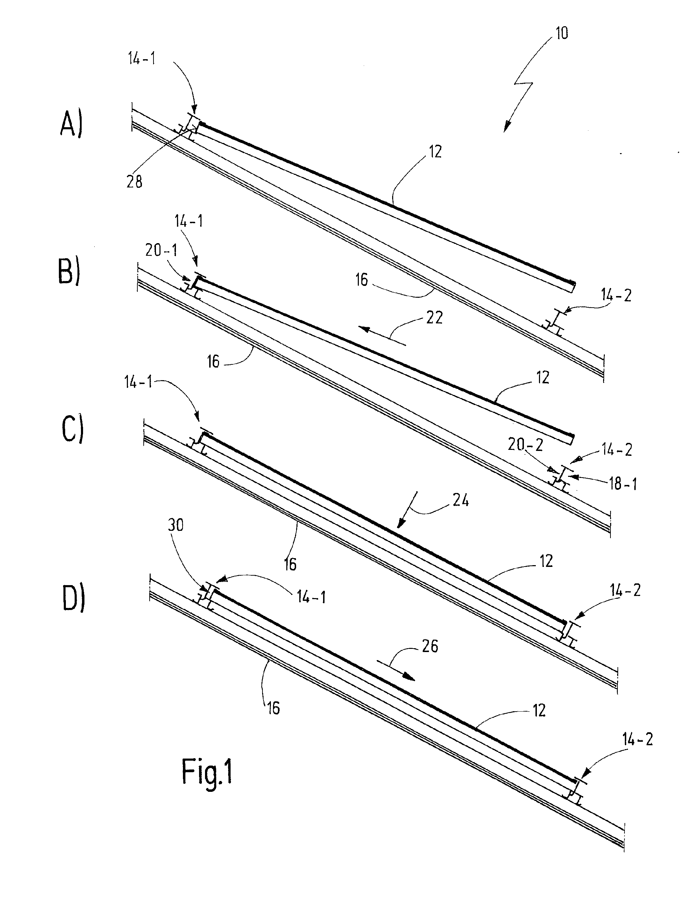

In den Fig. 1A bis 1C ist ein Einlegesystem für Photovoltaik- (PV-) Module 12 jeweils in einer Seitenansicht gezeigt. Die Fig. 1A bis 1D zeigen den Ablauf eines Einlegevorgangs in vier exemplarischen Schritten.

In dem in der Fig. 1A gezeigten Schritt wird das PV-Modul 12 mit seiner oberen Kante in eine obere Einlegeschiene 14-1 eingelegt, die an einem Dach 16 montiert ist. Neben der oberen Einlegeschiene 14-1 umfasst das Einlegesystem 10 auch eine untere Einlegeschiene 14-2. Die Einlegeschienen 14 sind in ihrer Längsrichtung, d.h. senkrecht zur Zeichnungsebene der Fig. 1, parallel zueinander orientiert. Die Einlegeschienen 14 sind vorzugsweise identisch ausgebildet. Die Einlegeschienen 14 weisen jeweils eine erste C-förmige Aufnahme 18 und eine gegenüberliegend angeordnete, zweite C-förmige Aufnahme 20 auf, wie es exemplarisch in der Fig. 1B für die untere Einlegeschiene 14-2 gezeigt ist. Die erste Aufnahme 18 dient zur Aufnahme der oberen Kante des PV-Moduls 12 und ist etwas größer ausgebildet als die zweite Aufnahme 20, die zur Aufnahme einer unteren Kante des PV-Moduls 12 dient.

Sobald die obere Kante des PV-Moduls 12 vor der ersten Aufnahme 18 der oberen Einlegeschiene 14-1 positioniert ist, wie es in Fig. 1A gezeigt ist, wird das PV-Modul 12 im Wesentlichen parallel zum Dach 16 nach oben in die erste Aufnahme 18 der oberen Einlegeschiene 14-1 eingeschoben, wie es in der Fig. 1B durch einen Hilfspfeil 22 angedeutet ist. Anschließend wird das PV-Modul 12 aus seiner relativ zu dem Dach 16 geneigten Lage nach unten abgesenkt, wie es in der Fig. 1C durch einen Hilfspfeil 24 angedeutet ist, der senkrecht zum Dach 16 orientiert ist. In der in der Fig. 1C gezeigten Lage ist das PV-Modul 12 im Wesentlichen parallel zum Dach 16 orientiert.

In einem letzten Schritt wird das PV-Modul 12 parallel zum Dach 16 nach unten in die zweite Aufnahme 20 der unteren Einlegeschiene 14-2 bewegt, wie es in der Fig. 1D durch einen Hilfspfeil 26 angedeutet ist. Durch die Bewegung entlang des Pfeils 26 bildet sich zwischen der oberen Einlegeschiene 14-1 und dem PV-Modul 12 ein Hohlraum 30 aus. Der Hohlraum 30 ist im Bereich der ersten Aufnahme 18 der oberen Einlegeschiene 14-1 angeordnet. Der Hohlraum 30 wird durch einen oberen Rand 28 des PV-Moduls 12 sowie die Schenkel der ersten Aufnahme 18 der oberen Einlegeschiene 14-1 begrenzt.

In der Fig. 1D ist das PV-Modul "schwimmend gehalten". Durch Umkehrung der Schritte der Fig. 1A-1D lässt sich das schwimmend gehaltene PV-Modul 12 ausbauen bzw. stehlen.

Bezug nehmend auf Fig. 2 ist eine (Sicherheits-) Klemme 40 gemäß der Erfindung in einer perspektivischen Darstellung gezeigt.

Die Klemme 40 weist einen Grundkörper 42 auf, der im Wesentlichen plattenförmig ausgebildet ist. Eine Platte ist ein ebenes, flächiges Bauteil aus einem steifen Material, das üblicherweise durch Kräfte senkrecht zu seiner Ebene und durch Momente um Achsen, die in der Plattenebene liegen, belastet wird. Der Grundkörper 42 weist mindestens ein Flügelelement 44 und mindestens eine erste Nase 46 auf. In der Fig. 2 sind exemplarisch zwei Flügelelemente 44-1 und 44-2 sowie zwei erste Nasen 46-1 und 46-2 gezeigt. Der Grundkörper 42 kann auch zweite Nasen 48 aufweisen, wobei in der Fig. 2 zwei zweite Nasen 48-1 und 48-2 gezeigt sind. Des Weiteren kann der Grundkörper 42 eine in einer Längsrichtung X verlaufende Vertiefung 50 aufweisen, die in der Fig. 2 als Sicke 52 realisiert ist. Die Ränder des Grundkörpers 42 sind mit 58 bezeichnet.

Die Vertiefung 50 - sowie die Flügelelemente 44 und die Nasen 46, 48 - erstrecken sich entlang einer (optionalen) Symmetrieachse 59, die hier parallel zur Längsrichtung X orientiert ist.

Die Flügelelemente 44, die ersten Nasen 46 und die zweiten Nasen 48 können symmetrisch zur Symmetrieachse 59 angeordnet sein. Dies kann sowohl für ihre Positionierung innerhalb der Plattenebene gelten, wie sie in der Fig. 2 durch eine Strichlinie 55 angedeutet ist, als auch für ihre Erstreckung senkrecht zur Plattenebene 55. Die Plattenebene 55 liegt in der Fig. 2 parallel zur X,Y-Ebene. Die Flügelelemente 44-1 und 44-2 sind aus der Plattenebene 55 nach unten in Richtung einer Unterseite 54 des Grundkörpers 42 gebogen. Gleiches gilt für die zweiten Nasen 48. Die ersten Nasen 46 sind nach oben zur Oberseite 56 hin aufgebogen. Die Flügelelemente 44 sowie die Nasen 46 und 48 können durch Schneiden und/oder Stanzen des Grundkörpers 42 erzeugt werden.

Der Grundkörper 42 besteht üblicherweise (einstückig) aus Metall, insbesondere aus Federstahl. Die Flügelelemente 44 können elastisch biegsam ausgebildet sein. Die Nasen 46 und 48 können plastisch biegsam ausgebildet sein. Der Grundkörper 42 kann aus unterschiedlichen Materialien bestehen. Eine elastische Beweglichkeit der Flügelelemente 44 ermöglicht es, die Klemme 40 in das Einlegesystem 10 einzufügen, aber auch wieder daraus zu entfernen. Die Nasen 46 und 48 dienen im Wesentlichen einer elektrischen Kontaktierung des PV-Moduls 12 mit den Einlegeschienen 14, die wiederum geerdet sind. Auf diese Weise wird sichergestellt, dass die PV-Module 12 in einem eingebauten Zustand gegen Blitzschlag gesichert sind.

Die Fig. 3A bis 3C werden nachfolgend gemeinsam beschrieben werden. In der Fig. 3A ist eine Draufsicht auf die Klemme 40 der Fig. 2 gezeigt. Die Fig. 3B zeigt eine Seitenansicht der Klemme 40 der Fig. 3A. Die Fig. 3C zeigt eine Vorderansicht der Klemme 40 der Fig. 3A.

Eine Grundfläche 55' des Grundkörpers 42 ist in der Fig. 3A mit einer Strichlinie angedeutet. Die Grundfläche 55' liegt in der Plattenebene 55 (vgl. Fig. 2). Der Grundkörper 42 weist eine Breite 66, eine Länge 68 und eine Dicke 70 (vgl. Fig. 3C) auf.

Die Flügelelemente 44-1 und 44-2 weisen jeweils eine Breite 72 (vgl. Fig. 3C) und eine Länge 64 (vgl. Fig. 3A) auf. Die Flügelelemente 44-1 und 44-2 können durch Einschnitte 60 in der Richtung X in den Grundkörper 42 und anschließendes Aufbiegen in der positiven Z-Richtung hergestellt werden. Die Einschnitte 60 sind mindestens so lang wie die Breite 72 der Flügelelemente 44, wie es durch einen Hilfspfeil 72' in der Fig. 3A angedeutet ist. Die Flügelelemente 44 sind in Randbereichen des Grundkörpers 42 angeordnet. Die Flügelelemente 44 sind entlang des (stirnseitigen) Rands 58 des Grundkörpers 42 angeordnet und erstrecken sich im Wesentlichen parallel zur Längsrichtung X.

Die ersten (Kontakt-) Nasen 46-1 und 46-2 sind relativ zentral angeordnet und können die Grundform eines Dreiecks aufweisen. Gleiches gilt für die zweiten (Kontakt-) Nasen 48-1 und 48-2. Die Nasen 46 und 48 unterscheiden sich lediglich in der Richtung ihrer Aufbiegung, wie es insbesondere aus der Fig. 3C ersichtlich wird. Die ersten Nasen 46 können in die gleiche Richtung aufgebogen werden wie die Flügelelemente 44. Es versteht sich, dass die Nasen 46 aber auch in umgekehrter Richtung aufgebogen werden können.

Die Flügelelemente 44 bilden mit der Plattenebene 55 jeweils einen Winkel α1, der zum Beispiel 40° betragen kann. Die ersten Nasen 46 bilden mit der Plattenebene 55 jeweils einen Winkel α2, der zum Beispiel 22° betragen kann. Die zweiten Nasen 48 bilden mit der Plattenebene 55 jeweils einen Winkel α3, der zum Beispiel 22° betragen kann. Andere Winkelbeträge sind frei wählbar.

Die Flügelelemente 44 können eine Höhe h1 von zum Beispiel 5,7 mm relativ zur Unterseite 54 aufweisen. Die ersten Nasen 46 können eine Höhe h2 relativ zur Oberseite 56 von zum Beispiel 1,2 mm aufweisen. Die zweiten Nasen 48 können jeweils eine Höhe h3 von zum Beispiel 1,2 mm relativ zur Unterseite 54 aufweisen.

Die Flügelelemente 44 können eine im Wesentlichen rechteckige Grundfläche aufweisen. Die Nasen 46 und 48 können eine im Wesentlichen dreieckige Grundfläche aufweisen. Es versteht sich, dass die Grundform der Nasen 46 und 48 aber auch anders gewählt werden kann. Auch die Breite 72 der Flügelelemente 44 kann variiert werden. Die Länge 64 der Flügelelemente 44 wird aber vorzugsweise in einer Größenordnung einer Breite 82 (vgl. Fig. 4) des Hohlraums 30 (vgl. Fig. 1) gewählt, um ein ungewolltes Entfernen der PV-Module 12 aus dem Einlegesystem 10 (Diebstahl) zu verhindern bzw. zu hemmen. Wenn nur Nasen 46 und/oder 48, d.h. keine Flügelelemente 44 vorgesehen sind, wird trotzdem eine Diebstahlsicherung erzielt, weil sich die Klemme 40 mit ihren Nasen 46 und/oder 48 in dem Spalt zwischen den PV-Modulen 12 und der Einlegeschiene 14 verkeilt. Umgekehrt gilt, dass, wenn ausschließlich Flügelelemente 44, d.h. keine Nasen 46/48, vorgesehen sind, die Flügelelemente 44 auch als Blitzschutz fungieren können, wenn sichergestellt ist, dass die Flügelelemente 44 (immer) sowohl die PV-Module 12 als auch die Einlegeschiene 14 im Hohlraum 30 berühren.

Durch die Aufbiegungen der Nasen 46 und 48 in unterschiedlichen Richtungen wird eine elektrische Kontaktierung der PV-Module 12 mit den Einlegeschienen 14 sicher gewährleistet, wie es nachfolgend im Zusammenhang mit der Fig. 4 näher beschrieben wird.

Die Vertiefung 50 dient im Wesentlichen einer Fixierung und Ausrichtung der PV-Module 12 im eingebauten Zustand in der X-Richtung und der Y-Richtung. In der Fig. 3C ist eine Tiefe 74 der Vertiefung 50 und ein effektiver (PV-Modul-) Abstand 76 gezeigt.

Bezug nehmend auf Fig. 4 wird das Zusammenwirken der Klemme 40 mit zwei PV-Modulen 12-1 und 12-2 erläutert. Es versteht sich, dass die Klemme 40 aber auch so ausgebildet sein kann, dass allein ein einziges PV-Modul 12 gesichert werden kann. Das Vorsehen eines benachbarten PV-Moduls 12 ist nicht zwingend erforderlich. In der Darstellung der Fig. 4 ist die Klemme 40 vollständig in den Spalt zwischen der Einlegeschiene 14 und den PV-Modulen 12 eingeschoben. Hier steht die Klemme exemplarisch aus dem Spalt vor. Üblicherweise wird die Klemme 40 im eingebauten Zustand aber vollständig von der Einlegeschiene 14 überdeckt.

Fig. 4 zeigt, dass die Klemme 40 zwischen zwei direkt benachbarte Module 12-1 und 12-3 in der Längsrichtung X eingeschoben wurde. Die obere Einlegeschiene 14-1 ist lediglich teilweise dargestellt, um den Blick auf die Klemme 40 freizugeben. Die obere Einlegeschiene 14-1 erstreckt sich in der Querrichtung Y tatsächlich durchgehend weiter und kommt mit den ersten Nasen 46-1 und/oder 46-2 in Anlage. Fig. 4 zeigt den Blick auf den oberen Rand 28 der PV-Module 12 im Bereich des Hohlraums 30, der durch die PV-Module 12 und die obere Einlegeschiene 14-1 im eingebauten Zustand der PV-Module 12 definiert wird. Die Breite des Hohlraums 30 ist in der Fig. 4 mit einem Hilfspfeil 82 angedeutet. Die Breite 82 erstreckt sich in der Längsrichtung X zwischen dem oberen Rand 28 der Module 12 und einem Mittelabschnitt der Einlegeschiene 14-1, der in der YZ-Ebene liegt. Die Länge 64 (vgl. Fig. 3A) der Flügelelemente 44-1 und 44-2 liegt vorzugsweise in der Größenordnung der Breite 82 des Hohlraums 30. In dem in der Fig. 4 gezeigten Zustand lassen sich die PV-Module 12 in der X-Richtung nahezu nicht mehr bewegen. Die Klemme 40 kann in der negativen X-Richtung nicht mehr herausgezogen werden, da die Flügelelemente 44 an den Rand 28 stoßen. Ein Ankippen des Grundkörpers 42 (Rotation um die Y-Achse) ist nicht möglich, da die Einlegeschiene 14-1 mit ihrem oberen Abschnitt, der in der XY-Ebene liegt, dem Grundkörper 42 nahezu unmittelbar gegenüberliegt.

Die Nasen 46 und 48 stellen eine Verbindung zwischen einem Rahmen 80 der PV-Module 12 und der Einlegeschiene 14 her. Die ersten Nasen 46 sind in der Fig. 4 nach oben ausgerichtet. Die zweiten Nasen 48 sind in der Fig. 4 nach unten ausgerichtet. Der Grundkörper 42 "schwebt" zwischen einer Oberseite 78 der Rahmen 80 und einer nicht näher bezeichneten Unterseite des oberen Abschnitts der Einlegeschiene 14-1. Diese schwebende Anordnung kann genutzt werden, um die Klemme 40 wieder aus der Einlegeschiene 14-1 zu lösen, wie es nachfolgend noch näher beschrieben werden wird.

Die Form der Sicke 52 ist so gewählt, dass sich ein gewünschter effektiver PV-Modul-Abstand 76 zwischen den benachbarten PV-Modulen 12-1 und 12-2 einstellt.

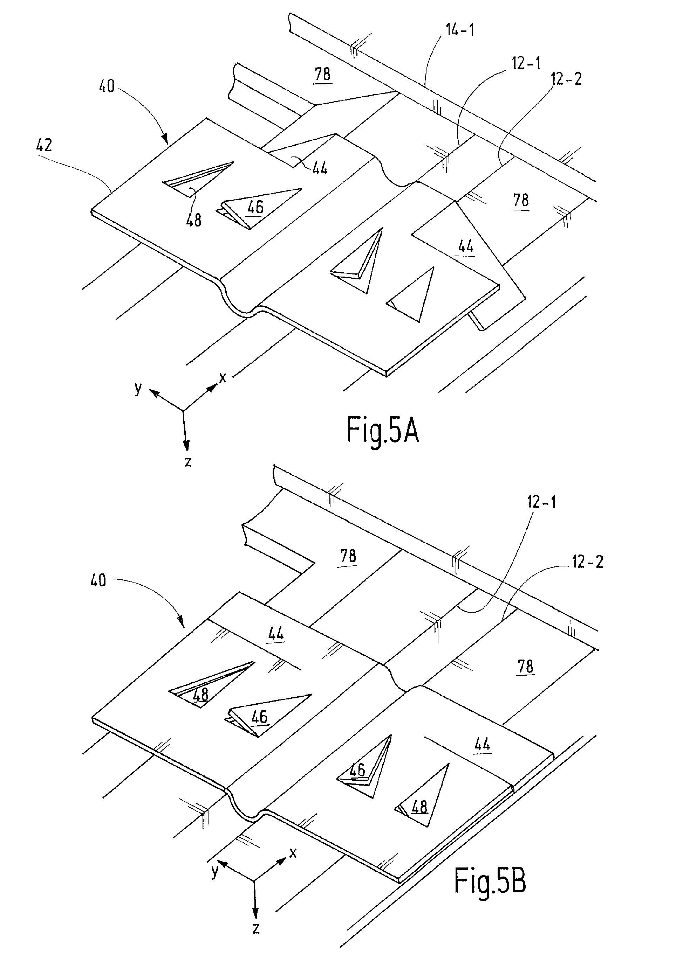

Bezug nehmend auf die Fig. 5A bis 5C wird nachfolgend ein Vorgang beschrieben, bei dem die Klemme 40 der vorhergehenden Figuren zwischen zwei PV-Module 12 eingefügt und unter eine Einlegeschiene 14 geschoben wird, bis die Flügelelemente 44 im Hohlraum 30 einrasten.

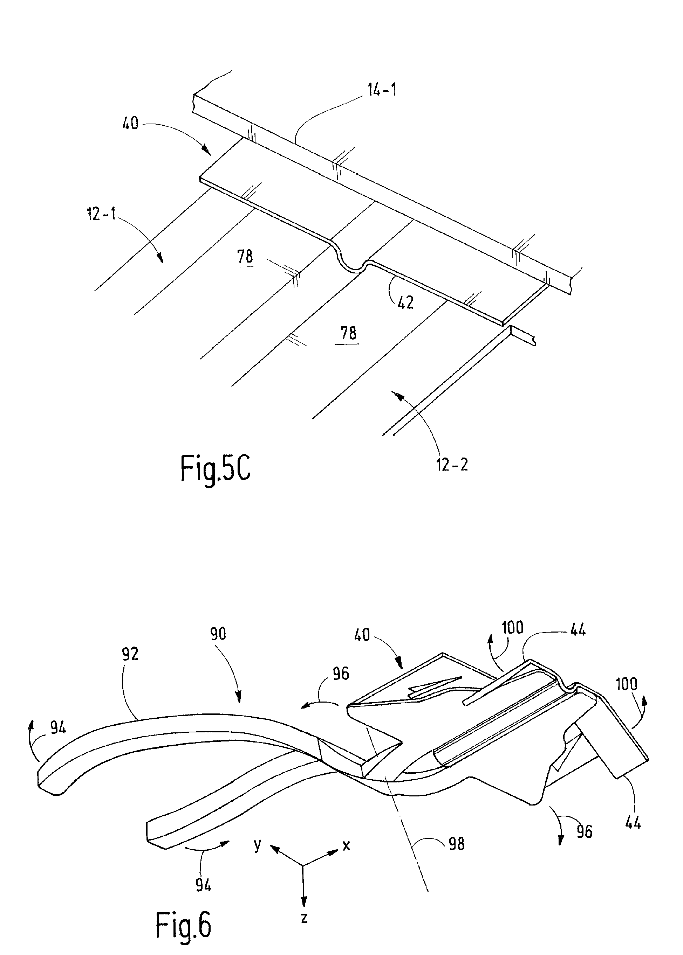

In Fig. 5A ist gezeigt, wie die Klemme 40 auf die PV-Module 12 aufgelegt wird. In Fig. 5B wird eine Kraft senkrecht zur Plattenebene 55 auf den Grundkörper 42 ausgeübt, so dass die Flügelelemente 44 und der Rest des Grundkörpers 42 nahezu in der gleichen Ebene liegen. Die Vertiefung 50 wird dabei in einem Raum zwischen den PV-Modulen 12 positioniert. Da die Flügelelemente 44 elastisch ausgebildet sind, kann der restliche Grundkörper 42 derart niedergedrückt werden, dass eine effektive Höhe der Klemme 40 drastisch verringert wird. Wie in der Fig. 5B gezeigt, ist die Klemme 40 so zusammengedrückt, dass sie in einen Spalt zwischen der Einlegeschiene 14 und den Oberseiten 78 der PV-Module 12 in der Längsrichtung X eingeschoben werden kann, wie es in der Fig. 5C gezeigt ist.

Selbst wenn eine Gesamthöhe der Klemme 40, wie sie in der Fig. 5B gezeigt ist, etwas größer als eine Höhe des Spalts zwischen der Einlegeschiene 14 und den Oberseiten 78 der PV-Module 12 sein sollte, lässt sich die Klemme 40 in der Längsrichtung X einschieben, weil die ersten Nasen 46 und/oder die zweiten Nasen 48 biegbar sind. Die Nasen 46 und/oder 48 sind relativ steif ausgebildet, damit eine elektrische Kontaktierung der Einlegeschiene 14 sichergestellt ist.

In Fig. 5C ist die Klemme 40 fast vollständig eingeschoben. Wenn die Klemme 40 vollständig in den Spalt eingeschoben ist, ragt sie vorzugsweise nicht mehr aus dem Spalt hervor, sondern ist optisch verschwunden, was die Ästhetik verbessert.

In Fig. 6 ist eine perspektivische Darstellung eines Werkzeugs 90 gezeigt, mit dem die Klemme 40 aus dem eingebauten Zustand, wie er in den Fig. 4 und 5C gezeigt ist, wieder ausgebaut werden kann. Beim Werkzeug 90 kann es sich um eine Zange 92 handeln, die zwischen die Klemme 40 und die Oberseiten 78 in Längsrichtung X eingeschoben wird.

Wenn nicht näher bezeichnete Griffe der Zange 92 auseinander oder aufeinander zu bewegt werden, wie es durch Hilfspfeile 94 gezeigt ist, bewegen sich die vorderen Enden der Hebel, die unterhalb der Klemme 40 liegen, in Richtung der Hilfspfeile 96. Die vorderen Enden der Hebel drehen dabei um eine Rotationsachse 98, um die Flügelelemente 44 anzuheben, wie es durch Hilfspfeile 100 angedeutet ist. Sobald die Flügelelemente 44 ausreichend angehoben wurden, d.h. wenn die Flügelelemente 44 nahezu in der Plattenebene 55 liegen, kann die Klemme 40 in negativer X-Richtung herausgezogen und entfernt werden.

Solange die Klemme 40 jedoch in dem Zustand der Fig. 4 und 5C ist, kann keines der PV-Module 12 ausgebaut werden, indem die im Zusammenhang mit den Fig. 1A bis 1D beschriebene Prozedur umgekehrt durchlaufen wird.

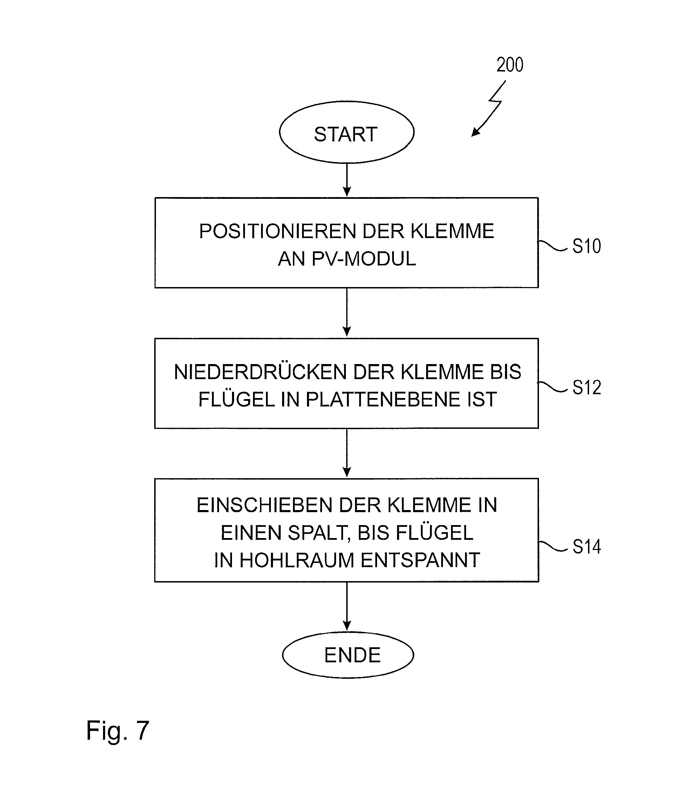

In Fig. 7 ist ein Verfahren 200 zum Sichern von PV-Modulen 12 in Einlegeschienen 14 eines Einlegesystems 10 mit einer Sicherheitsklemme 40 gemäß der Erfindung gezeigt. In einem ersten Schritt S10 wird die Sicherheitsklemme 40 an einem der PV-Module 12 ausgerichtet, wie es exemplarisch in der Fig. 5A gezeigt ist. Anschließend wird in einem Schritt S12 die Sicherheitsklemme 40 derart niedergedrückt, dass das mindestens eine Flügelelement 44 im Wesentlichen in einer Plattenebene 55 des Grundkörpers 42 der Sicherheitsklemme 40 liegt, wie es in der Fig. 5B gezeigt ist. Anschließend wird die Sicherheitsklemme 40 in einem Schritt S14 in einen Spalt zwischen einer oberen Einlegeschiene 14-1 und einer Oberseite 78 des PV-Moduls 12 eingeschoben, bis sich das mindestens eine Flügelelement 44 in den Hohlraum 30 entspannt und so ein Zurückbewegen der Sicherheitsklemme 40 verhindert.

Die oben stehende Beschreibung der Figuren hält sich bei der Wahl der Orientierungen der Koordinatensysteme an die generell üblichen Bezeichnungen, so dass die Längsrichtung mit X, die Breite mit Y und die Tiefe mit Z bezeichnet wurden.

Des Weiteren wurden gleiche Teile und Merkmale mit den gleichen Bezugsziffern versehen. Die in der Beschreibung enthaltenen Offenbarungen sind sinngemäß auf gleiche Teile und Merkmale mit denselben Bezugszeichen übertragbar. Lage- und Orientierungsangaben (wie zum Beispiel "oben", "unten", "seitlich", "längs", "quer", "horizontal", "vertikal" oder dergleichen) sind auf die unmittelbar beschriebene Figur bezogen. Bei einer Änderung der Lage oder Orientierung sind die Angaben aber sinngemäß auf die neue Lage bzw. Orientierung zu übertragen.

## Patentansprüche

1. Sicherheitsklemme (40) zur Hemmung eines Diebstahls eines Photovoltaik-(PV-)Moduls (12) bzw. von zwei benachbart angeordneten PV-Modulen (12), wobei jedes PV-Modul (12) Seitenränder (28) aufweist, wobei das bzw. die PV-Module (12) zwischen zwei parallelen Einlegeschienen (14-1, 14-2) eines Einlegsystems (10), die die Seitenränder (28) des bzw. der PV-Module (12) zwecks einer Fixierung der PV-Module (12) im Einlegesystem (10) umgreifen, schwimmend gehalten wird bzw. werden, aufweisend:
einen plattenförmigen Grundkörper (42), der zumindest ein Flügelelement (44), und vorzugsweise zumindest eine erste Kontaktnase (46), aufweist;
wobei das zumindest eine Flügelelement (44) elastisch ist und biegsam aus dem Grundkörper (42) vorsteht; und
wobei das zumindest eine Flügelelement (44) derart dimensioniert ist, dass das zumindest eine Flügelelement (44) eine Breite (82) eines Hohlraums (30) im Wesentlichen ausfüllt, der zwischen mindestens dem bzw. den PV-Modulen (12) und einer der Einlegeschienen (14) definiert ist, wenn das bzw. die PV-Module (12) in einem eingebauten Zustand in dem Einlegesystem (10) angeordnet ist bzw. sind.

2. Sicherheitsklemme nach Anspruch 1, die zumindest eine erste Kontaktnase (46) aufweist, wobei die zumindest eine erste Kontaktnase (46) biegsam ist und aus dem Grundkörper (42) vorsteht.

3. Sicherheitsklemme nach Anspruch 2, wobei die zumindest eine erste Kontaktnase (46) derart aus dem Grundkörper vorsteht, dass die Klemme (40) zwischen dem bzw. den PV-Modulen (12) und einer der Einlegeschienen (14-1) verkeilbar ist.

4. Sicherheitsklemme (40) zur Sicherung eines Photovoltaik-(PV-)Moduls (12) bzw. von zwei benachbart angeordneten PV-Modulen (12) bei Blitzschlag, wobei jedes PV-Modul (12) Seitenränder (28) aufweist, wobei das bzw. die PV-Module (12), vorzugsweise benachbart, zwischen zwei parallelen Einlegeschienen (14-1, 14-2) eines Einlegsystems (10), die die Seitenränder (28) der PV-Module (12) zwecks einer Fixierung der PV-Module (12) im Einlegesystem (10) umgreifen, schwimmend gehalten werden, aufweisend:
einen plattenförmigen Grundkörper (42), der zumindest eine erste Kontaktnase (46), und vorzugsweise zumindest ein Flügelelement (44), aufweist;
wobei die zumindest eine erste Kontaktnase (46) derart aus dem Grundkörper (42) vorsteht, dass die Klemme (40) zwischen den PV-Modulen (12) und einer der Einlegeschienen (14-1) verkeilbar ist.

5. Sicherheitsklemme nach Anspruch 4, wobei das zumindest eine Flügelelement (44) elastisch biegsam ist und aus dem Grundkörper (42) vorsteht; und
wobei das zumindest eine Flügelelement (44) derart dimensioniert ist, dass das zumindest eine Flügelelement (44) eine Breite (82) eines Hohlraums (30) im Wesentlichen ausfüllt, der zwischen mindestens einem der PV-Module (12) und einer der Einlegschienen (14) definiert ist, wenn das mindestens eine der PV-Module (12) in einem eingebauten Zustand in dem Einlegsystem (10) angeordnet ist.

6. Sicherheitsklemme nach einem der vorhergehenden Ansprüche, wobei mindestens eine zweite Kontaktnase (48) vorgesehen ist, die aus dem Grundkörper (42) in einer Richtung vorsteht, die entgegengesetzt zu einer Richtung orientiert ist, in welcher die erste Kontaktnase (46) aus dem Grundkörper (42) vorsteht.

7. Sicherheitsklemme nach einem der vorhergehenden Ansprüche, die aus einem elektrisch leitfähigen Material, insbesondere Federstahl, besteht.

8. Sicherheitsklemme nach einem der vorhergehenden Ansprüche, wobei der Grundkörper (42) eine im Wesentlichen rechteckige Grundfläche (55) aufweist, wobei jedes Flügelelement (44) und jede Kontaktnase (46; 48) durch Schneiden, Stanzen und/oder Aufbiegen des Grundkörpers (42) gebildet wird.

9. Sicherheitsklemme nach Anspruch 8, wobei der Grundkörper (42), jedes Flügelelement (44) und jede Kontaktnase (46; 48) einstückig miteinander ausgebildet sind.

10. Sicherheitsklemme nach einem der vorhergehenden Ansprüche, wobei jedes Flügelelement (44) an einem Rand (58) des Grundkörpers (42) angeordnet ist.

11. Sicherheitsklemme nach einem der vorhergehenden Ansprüche, wobei der Grundkörper (42) so dick ist, dass der Grundkörper (42) zwischen eine Oberseite (78) des einen der PV-Module (12) und die eine der Einlegschienen (14) schiebbar ist.

12. Sicherheitsklemme nach einem der vorhergehenden Ansprüche, wobei eine Grundfläche jedes Flügelelements (44) rechteckig ist.

13. Sicherheitsklemme nach einem der vorhergehenden Ansprüche, wobei eine Grundfläche jeder Kontaktnase (46; 48) dreieckig ist.

14. Sicherheitsklemme nach einem der vorhergehenden Ansprüche, wobei die Flügelelemente (44) und die Kontaktnasen (46; 48) symmetrisch angeordnet sind.

15. Einlegesystem (10) mit mindestens einer Sicherheitsklemme (40) gemäß einem der vorhergehenden Ansprüche.

16. Verfahren zum Sichern von PV-Modulen (12) in Einlegeschienen (14-1, 14-2) eines Einlegesystems (10) mit einer Sicherheitsklemme (40), die vorzugsweise gemäß einem der vorhergehenden Ansprüche ausgebildet ist, mit folgenden Schritten:
- Positionieren (S10) der Sicherheitsklemme (40) an einem der PV-Module (12);
- Niederdrücken (S12) der Sicherheitsklemme (40), so dass mindestens ein Flügelelement (40) im Wesentlichen in einer Plattenebene (55) eines Grundkörpers (42) der Sicherheitsklemme (40) liegt; und
- Einschieben (S14) der Sicherheitsklemme (40) in einen Spalt zwischen einer oberen Einlegeschiene (14-1) und einer Oberseite (78) des einen der PV-Module (12), bis das mindestens eine Flügelelement (40) sich in einen Hohlraum (30) entspannt und so ein Zurückbewegen der Sicherheitsklemme (40) verhindert.
